# EUROPÄISCHE PATENTANMELDUNG

(11) **EP 0 660 336 A2**
(43) Veröffentlichungstag der Anmeldung: **28.06.1995**
(21) Anmeldenummer: 94810693.5
(22) Anmeldetag: 05.12.1994
(51) Int. Cl.: H01B 3/04, H01B 3/18, H01B 3/08, H01B 7/34, H01B 13/10

(54) **Elektrisches Isoliermaterial und Verfahren zur Herstellung eines elektrisch isolierten Leiters**

(30) Priorität: 23.12.1993 DE 4344044
(71) Anmelder: ABB RESEARCH LTD., CH-8050 Zürich 11 (CH)
(72) Erfinder: Boese, Diethelm, Dr., CH-5444 Künten (CH); Keser, Gislind, CH-5242 Birr (CH); König, Friedrich, CH-5225 Oberbözberg (CH)
(74) Vertreter: Kaiser, Helmut, Dr.

(57) **Zusammenfassung**

Es wird ausgegangen von einem elektrischen Isoliermaterial mit einer Matrix aus mindestens einem Polymer in welche mindestens ein plättchenförmig ausgebildetes, isolierendes Mineral eingelagert ist.

Es soll ein Isoliermaterial geschaffen werden, welches für die Herstellung von auch bei hohen Spannungen und bei vergleichsweise hohen Betriebstemperaturen teilentladungsfreien Isolationen geeignet ist. Dies wird dadurch erreicht, dass als Polymer ein temperaturfestes Thermoplast vorgesehen ist, und dass als isolierendes Mineral Micromicaplättchen eingelagert sind mit einer Teilchengrösse kleiner als 20µm. Ferner soll ein Verfahren zur Herstellung eines elektrisch isolierten Leiters angegeben werden, bei welchem das Isoliermaterial eingesetzt wird.

## Beschreibung

### TECHNISCHES GEBIET

Die Erfindung geht aus von einem elektrischen Isoliermaterial gemäss dem Oberbegriff des Anspruchs 1 und von einem Verfahren zur Herstellung eines elektrisch isolierten Leiters.

### STAND DER TECHNIK

Aus der Offenlegungsschrift DE 1 665 965 ist ein Verfahren zum Isolieren dünner elektrischer Leiter mit thermoplastischen Kunststoffen bekannt. Mit Hilfe einer Dispersion, die den thermoplastischen Kunststoff in pulverförmigem Zustand enthält, und durch die der Leiter so hindurchgezogen wird, dass er von der Dispersion eingehüllt wird, wird der Leiter mit dem Thermoplastpulver beschichtet. Der so vorbehandelte Leiter wird in Öfen erhitzt, sodass das Dispersionsmittel entweicht, während das auf dem Leiter verbleibende Thermoplastpulver zu einem homogenen Überzug verschmilzt. Eine besonders gute Isolation wird erreicht, wenn der Dispersion plättchenförmiger Glimmer zugegeben wird, der als Füllstoff in dem homogenen Überzug verbleibt.

Aus der Schrift EP 0 569 217 A2 ist eine Isolierfolie bekannt, welche aus einem mit einem thermoplastischen Stoff beschichteten Glasfasergewebe besteht. Das Beschichten erfolgt entweder mit einem Extrudierverfahren oder mit Hilfe einer entsprechenden Dispersion, die auf das Glasfasergewebe aufgebracht wird, wobei sich der in Pulverform in der Dispersion enthaltene thermoplastische Stoff an das Glasfasergewebe anlagert, der thermoplastische Stoff wird danach durch Erhitzung auf das Glasfasergewebe aufgeschmolzen. Die Isolierfolie weist demnach auf einer Seite das rauhere Glasfasergewebe und auf der anderen Seite die glatte Oberfläche, die der thermoplastische Stoff bildet, auf. Für den Einsatz in auch bei vergleichsweise hohen Spannungen teilentladungsfreien Isolationsschichten ist diese Isolierfolie wegen der im Glasfasergewebe verbleibenden, luftgefüllten Hohlräume nicht oder nur bedingt geeignet. Zudem ist sie nur für vergleichsweise kleine Betriebstemperaturen geeignet.

### DARSTELLUNG DER ERFINDUNG

Die Erfindung, wie sie in den unabhängigen Ansprüchen gekennzeichnet ist, löst die Aufgabe, ein elektrisches Isoliermaterial anzugeben, welches für die Herstellung von auch bei hohen Spannungen und bei vergleichsweise hohen Betriebstemperaturen teilentladungsfreien Isolationen geeignet ist. Ferner soll ein Verfahren zur Herstellung eines elektrisch isolierten Leiters angegeben werden, bei welchem das Isoliermaterial eingesetzt wird.

Das Isoliermaterial eignet sich besonders für die Isolation von elektrischen Leitern die in elektrischen Maschinen wie Motoren oder Generatoren eingebaut werden. In Plattenform ausgebildet, wird es für die Nutisolation von elektrischen Maschinen eingesetzt. Ebenso können auch Drosselspulen oder Sperrdrosseln mit diesem Isoliermaterial isoliert werden.

Die durch die Erfindung erreichten Vorteile sind im wesentlichen darin zu sehen, dass als Polymer ein Thermoplast eingesetzt wird. Ein mit dem thermoplastischen Isoliermaterial isolierter und dann heiss verpresster Leiter verklebt nicht mit den Flanken der Nut in die er eingelegt wird. Bei etwaigen Reparaturen kann der Leiter deshalb problemlos aus der Nut entnommen repariert und dann wieder in die Nut eingebracht werden. Sollte die Isolation des Leiters beschädigt sein, so kann die beschädigte Stelle spanabhebend entfernt werden. Ein Pfropfen aus dem thermoplastischen Isoliermaterial mit der entsprechenden Dicke und der entsprechenden Form wird dann an der Fehlerstelle aufgelegt und heiss verpresst. Das Material des Pfropfens und das der verbliebenen Leiterisolation schmelzen zusammen, sodass die Fehlerstelle wieder mit einer fugenlosen, homogenen und spannungsfesten Isolierschicht abgedeckt ist. Der so reparierte Leiter ist bezüglich der Isolationsfestigkeit als neuwertig zu betrachten.

Die Micromicaplättchen verteilen sich wegen ihrer geringen Grösse sehr gleichmässig in der Matrix des Thermoplasten, sodass ein homogenes Endprodukt entsteht. Gegenüber normal grossen Micaplättchen weisen die Micromicaplättchen ein vergleichsweise sehr grosses Aspektverhältnis auf, was zur Folge hat, dass sich in der Matrix eine besonders gute dielektrische Barriere ausbilden kann, die für die hohe Teilentladungsfestigkeit des Isoliermaterials sorgt.

Das Polysulfon ist thermisch sehr stabil und ist deshalb für die Isolation von thermisch beanspruchten Leitern und Wicklungen besonders gut geeignet. Das Polysulfon ist für Betriebstemperaturen wie sie in der Wärmeklasse F und darüber auftreten sehr gut geeignet. Demnach ist es für den Einbau in grosse elektrische Motoren und Generatoren, in deren Innerem Temperaturen von 150°C auftreten können, durchaus geeignet. Von Vorteil ist es auch, dass es vergleichsweise schwer entflammbar ist, sodass in dem hier vorgesehenen Einsatzbereich eine Zugabe von Brandschutzchemikalien nicht nötig ist. Ferner ist Polysulfon sehr widerstandsfähig gegen wässrige Lösungen von alkalischen Stoffen und gegen Säuren. Ferner ist es nicht der Alterung unterworfen, was gegenüber den bisher üblichen Isoliermaterialien sehr vorteilhaft ist.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 einen Schnitt durch ein Isoliermaterial,
Fig.2 einen Teilschnitt durch einen ersten mit Isoliermaterial versehenen Leiter,
Fig.3 einen Teilschnitt durch einen zweiten mit Isoliermaterial versehenen Leiter,
Fig.4 eine schematische Darstellung eines in eine Nut eingelegten, isolierten Leiters, und
Fig.5 ein erstes Blockdiagramm eines erfindungsgemässen Verfahrens.

Alle für das unmittelbare Verständnis der Erfindung nicht erforderlichen Elemente sind nicht dargestellt.

### WEGE ZUR AUSFÜHRUNG DER ERFINDUNG

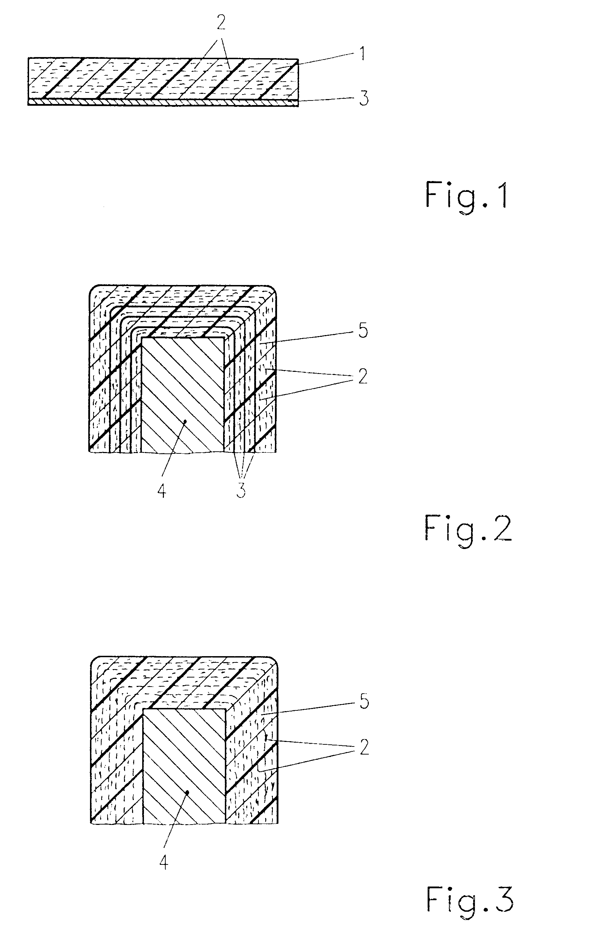

Die Fig.1 zeigt einen Schnitt durch ein elektrisches Isoliermaterial, welches als Isolierfolie ausgebildet ist. In eine Matrix aus einem Thermoplast 1, hier wurde beispielsweise Polysulfon als Thermoplast eingesetzt, sind Micromicaplättchen 2 eingelagert, wie in Fig.l schematisch dargestellt. Die Micromicaplättchen 2 sind hier beispielsweise aus Muskovit, es ist jedoch auch möglich stattdessen Phlogopitplättchen einzusetzen oder ein Gemisch aus den beiden Komponenten. Die Micromicaplättchen 2 weisen eine Teilchengrösse im Bereich kleiner als 20µm auf. In der Regel sind 20 bis 35 Gewichtsprozent Micromicaplättchen 2 in die Thermoplastmatrix eingelagert. Die Micromicaplättchen 2 werden in der Regel mit unbehandelter Oberfläche beigemischt, es ist jedoch auch möglich, Micromicaplättchen 2 beizumischen, die an der Oberfläche mit einem Haftvermittler wie beispielsweise Silan behandelt wurden. Die Matrix wird hier zusätzlich durch ein der mechanischen Verstärkung dienendes Trägermaterial 3 gestützt, was sich besonders bewährt, wenn das Isoliermaterial durch eine Wickelmaschine weiter verarbeitet wird. Wird von Hand gewickelt oder sind weniger als 26 Gewichtsprozent Micromicaplättchen eingelagert, so kann in der Regel auf eine derartige mechanische Verstärkung verzichtet werden, ebenso, wenn das Isoliermaterial in vergleichsweise dicken Platten hergestellt wird.

Als Thermoplast 1 können beispielsweise Polyimide oder Polykarbonate oder Polyethylenterephthalate (PET) oder Polyethylennaphtalate (PEN) oder Polyphenylsulfide oder Polyphenyloxide oder Polyetherimide oder Polyetheretherketone oder Polypropylen oder Polyphenylsulfon oder Polyarylsulfon oder Polyethersulfon eingesetzt werden, insbesondere kann auch Polysulfon eingesetzt werden.

Derartige Isolierfolien können mittels verschiedener Verfahren hergestellt werden. Abhängig vom Verfahren kann auch der Gehalt an Micromicaplättchen variiert werden. Wird ein Extrudierverfahren verwendet, so können 10 bis etwa 40 Gewichtsprozent an Micromicaplättchen dem Polymer beigemischt werden. Wird die Isolierfolie mit Hilfe einer Dispersion hergestellt, so ist es möglich, noch höhere Füllgrade zu erreichen, in diesem Fall können sogar 100 bis 150 Gewichtsprozent an Micromicaplättchen beigemischt werden.

### 1. Ausführungsbeispiel:

Eine Mischung von Polysulfon mit 25 Gewichtsprozent Micromicaplättchen auf der Basis von Muskovit wird zunächst in bekannter Weise compoundiert und danach in einen Extruder eingebracht. Die Micromicaplättchen 2 weisen eine Teilchengrösse kleiner als 15µm auf. Nach dem Extruder entsteht eine 90µm dicke Isolierfolienbahn, auf die anschliessend das Trägermaterial 3 in einem Kalander unter Temperaturbeaufschlagung aufgewalzt wird. Als Trägermaterial 3 wird ein Glasfasergewebe mit einem Gewicht von 23g/m² eingesetzt. Daran anschliessend wird das Isoliermaterial entsprechend dem vorgesehenen Verwendungszweck zugeschnitten.

### 2. Ausführungsbeispiel:

Eine Mischung von Polysulfon mit 35 Gewichtsprozent Micromicaplättchen auf der Basis von Phlogopit wird zunächst in bekannter Weise compoundiert und danach in einen Extruder eingebracht. Die Micromicaplättchen 2 weisen eine Teilchengrösse kleiner als 15µm auf. Nach dem Extruder entsteht eine 90µm dicke Isolierfolienbahn, auf die anschliessend das Trägermaterial 3 in einem Kalander unter Temperaturbeaufschlagung aufgewalzt wird. Als Trägermaterial 3 wird ein längsverstärktes Polyesterflies eingesetzt. Daran anschliessend wird das Isoliermaterial entsprechend dem vorgesehenen Verwendungszweck zugeschnitten.

Es ist durchaus möglich, die Isoliermaterialien gemäss der Ausführungsbeispiele 1 und 2 auch ohne das aufgewalzte Trägermaterial zu belassen.

### 3. Ausführungsbeispiel:

Es wird eine Mischung aus 100 Gewichtsteilen Polysulfongranulat oder Polysulfonpulver mit 125 Gewichtsteilen Tetrahydrofuran und 125 Gewichtsteilen Dimethylformamid unter dauerndem Rühren hergestellt. In dieser Mischung werden 150 Gewichtsteile Micromicaplättchen 2 auf der Basis von Muskovit, die eine Teilchengrösse kleiner als 15µm aufweisen, dispergiert.

Mit dieser Dispersion wird ein Glasfasergewebe mit einem Gewicht von 23g/m² beschichtet. Das beschichtete Glasfasergewebe wird in einem Ofen bei 180°C während zwei Stunden getrocknet. Bei diesem Trocknungsvorgang verdampft zuerst das niedrig siedende Tetrahydrofuran und erst danach das höher siedende Dimethylformamid, sodass sich in der sich unter dem Temperatureinfluss ausbildenden Polysulfonmatrix keine Blasen ausbilden können, welche die Homogenität der Matrix stören. Nach dem Trocknungsvorgang ist das Isoliermaterial etwa 150µm dick und kann weiter verarbeitet werden.

### 4. Ausführungsbeispiels

Es wird eine Mischung aus 100 Gewichtsteilen Polysulfongranulat oder Polysulfonpulver mit 125 Gewichtsteilen Tetrahydrofuran und 125 Gewichtsteilen Dimethylformamid unter dauerndem Rühren hergestellt. In dieser Mischung werden 120 Gewichtsteile Micromicaplättchen 2 auf der Basis von Phlogopit, die eine Teilchengrösse kleiner als 15µm aufweisen, dispergiert.

Mit dieser Dispersion wird ein Glasfasergewebe mit einem Gewicht von 23g/m² beschichtet. Das beschichtete Glasfasergewebe wird in einem Ofen bei 180°C während zwei Stunden getrocknet. Bei diesem Trocknungsvorgang verdampft zuerst das niedrig siedende Tetrahydrofuran und erst danach das höher siedende Dimethylformamid, sodass sich in der sich unter dem Temperatureinfluss ausbildenden Polysulfonmatrix keine Blasen ausbilden können, welche die Homogenität der Matrix stören. Nach dem Trocknungsvorgang ist das Isoliermaterial etwa 130µm dick und kann weiter verarbeitet werden.

### 5. Ausführungsbeispiel:

Es wird eine Mischung aus 100 Gewichtsteilen Polysulfongranulat oder Polysulfonpulver mit 200 Gewichtsteilen Toluol und 120 Gewichtsteilen Aceton und 80 Gewichtsteilen Tetrahydrofuran unter dauerndem Rühren hergestellt. In dieser Mischung werden 120 Gewichtsteile Micromicaplättchen 2 auf der Basis von Muskovit, die eine Teilchengrösse kleiner als 15µm aufweisen, dispergiert.

Mit dieser Dispersion wird ein Glasfasergewebe mit einem Gewicht von 23g/m² beschichtet. Das beschichtete Glasfasergewebe wird in einem Ofen bei 180°C während zwei Stunden getrocknet. Bei diesem Trocknungsvorgang verdampft zuerst das niedrig siedende Aceton, danach dann das Tetrahydrofuran und erst danach das höher siedende Toluol, sodass sich auch hier in der sich unter dem Temperatureinfluss ausbildenden Polysulfonmatrix keine Blasen ausbilden können, welche die Homogenität der Matrix stören. Nach dem Trocknungsvorgang ist das Isoliermaterial etwa 120µm dick und kann weiter verarbeitet werden.

### 6. Ausführungsbeispiel:

Statt dem Glasfasergewebe, welches als Trägermaterial in den Ausführungsbeispielen 3 bis 5 mit der jeweiligen Dispersion beschichtet wurde, ist es auch möglich, ein Polysulfongewebe oder ein längsverstärktes Polyesterflies oder ein PET- oder ein PEN- Gewebe zu verwenden. Ferner ist es möglich, statt der aufgezählten Gewebe auch Folien aus den entsprechenden Materialien als Trägermaterial einzusetzen. Diese Kunststoffgewebe bzw. -folien werden etwa mit einer Dicke von 50 bis 75µm eingesetzt.

Ferner ist es möglich, ein Hybridgewebe aus Glasfasern und mindestens einem der angegebenen Kunststoffe zu verwenden.

### 7. Ausführungsbeispiel:

Statt den Micromicaplättchen 2 mit unbehandelter Oberfläche, wie sie in den Ausführungsbeispielen 1 bis 6 beigemischt wurden, ist es auch möglich, Micromicaplättchen 2 beizumischen, die an der Oberfläche so behandelt wurden, dass diese eine gewisse Leitfähigkeit aufweist, insbesondere auch mit Cr₂O₃ oder Fe₂O₃ oder TiO₂ beschichtete Micromicaplättchen. Zudem sind auch mit TiO₂ beschichtete Micromicaplättchen verwendbar, die zusätzlich noch mit einer Schicht Cr₂O₃ oder Fe₂O₃ versehen sind. Gut leitende Micromicaplättchen ergeben sich, wenn diese mit einer Nickelschicht oder mit einer mit Antimon dotierten Zinnoxidschicht umhüllt sind, oder wenn zwischen den Micromicaplättchen und der mit Antimon dotierten Zinnoxidschicht eine SiO₂ - Schicht und eine TiO₂ - Schicht liegen. Es ist zudem eine Vielzahl weiterer Beschichtungsmöglichkeiten bekannt. Ferner ist es möglich der Polysulfonmatrix direkt leitende oder halbleitende Metalloxidpulver oder Metallpulver beizumischen.

Es wird eine Mischung aus 100 Gewichtsteilen Polysulfongranulat oder Polysulfonpulver mit 125 Gewichtsteilen Tetrahydrofuran und 125 Gewichtsteilen Dimethylformamid unter dauerndem Rühren hergestellt. In dieser Mischung werden 120 Gewichtsteile der vorbehandelten Micromicaplättchen 2 auf der Basis von Muskovit, die eine Teilchengrösse kleiner als 15µm aufweisen, dispergiert.

Mit dieser Dispersion wird ein PET-Träger mit glatter Oberfläche beschichtet. Der so beschichtete Träger wird mit der Beschichtung in einem Ofen bei 180°C während zwei Stunden getrocknet. Bei diesem Trocknungsvorgang verdampft zuerst das niedrig siedende Tetrahydrofuran und erst danach das höher siedende Dimethylformamid, sodass sich in der sich unter dem Temperatureinfluss ausbildenden Polysulfonmatrix keine Blasen ausbilden können, welche die Homogenität der Matrix stören. Nach dem Trocknungsvorgang ist das Isoliermaterial etwa 120µm dick und wird vom Träger abgelöst.

Von dem entsprechend den Ausführungsbeispielen 1 bis 6 hergestellten Isoliermaterial wurden jeweils mehrere Schichten übereinander gelegt und heiss miteinander verpresst, sodass 0,5 mm dicke Laminate entstanden. Dabei wurde das übereinander gelegte Isoliermaterial zunächst in eine auf etwa 150°C vorgewärmte Presse eingelegt und unter Beaufschlagung mit einem vergleichsweise niederen Druck von 0,2 MPa bis auf 250°C aufgeheizt. Unter Beibehaltung dieser Endtemperatur wurde der Druck dann auf 5 MPa gesteigert und während 2 Minuten beibehalten. Danach wurden Druck und Temperatur reduziert und bei 150°C wurde das Laminat aus der Presse entnommen und danach auf Raumtemperatur abgekühlt. Das gemäss Ausführungsbeispiel 7 hergestellte Isoliermaterial wurde während 15 Minuten mit einem Druck von 3 kPa bei der Endtemperatur von 250°C beaufschlagt, wodurch eine gleichmässig glatte Oberfläche entstand.

Aus diesen Laminaten wurden Stücke von 150 mm x 150 mm ausgeschnitten und einer dielektrischen Prüfung unterworfen. Diese Laminate konnten jeweils in einer Hochspannungsprüfeinrichtung der angelegten Prüfspannung von 12 kV bei 50 Hz während 2000 Stunden ohne Beanstandung standhalten. Diese Prüfung wird im Rahmen von Dauerversuchen über grössere Zeiträume weitergeführt.

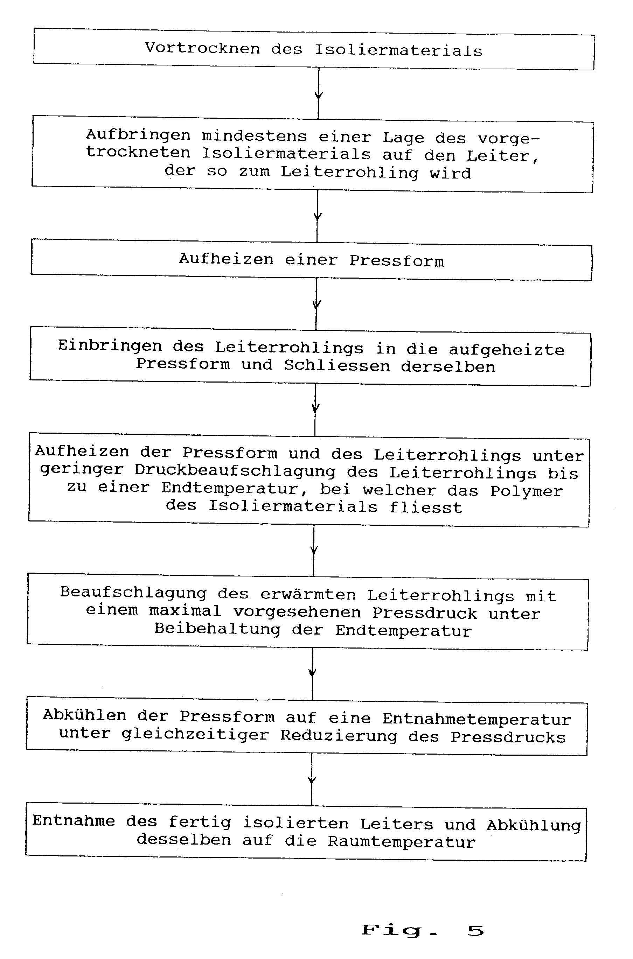

Das Isoliermaterial, dessen Herstellung im Ausführungsbeispiel 1 beschrieben ist, wird in 25mm breite Folien geschnitten. Diese Folie wird danach weiter verarbeitet, wie in Fig.5 dargestellt. Die Fig.5 zeigt ein Blockdiagramm eines erfindungsgemässen Verfahrens zur Herstellung eines elektrisch isolierten Leiters, der vorzugsweise für den Einbau in Nuten von elektrischen Maschinen vorgesehen ist. An die als Ausgangsmaterial verwendete Folie lagert sich häufig etwas Feuchtigkeit an, deshalb ist vor der weiteren Verarbeitung ein kontrollierter Trocknungsvorgang vorzusehen, der sicherstellt, dass diese Feuchtigkeit auf 0,05% reduziert wird. Nach dem Vortrocknen der Folie wird mit dieser ein zu isolierender Leiter bewickelt. Dabei wird mindestens eine Lage der Folie auf den metallisch blanken Leiter aufgebracht, der so zum Leiterrohling wird. In der Regel wird beim Wickeln die Folie so geführt, dass eine Überlappung der aufeinanderfolgenden Windungen erfolgt. Ferner werden meistens nacheinander mehrere Lagen der Folie auf den Leiter aufgebracht.

Die Folie soll mit dem Leiter heiss verpresst werden. Um eine vernünftige Durchlaufzeit zu erreichen, wird die hierfür nötige Pressform vorab aufgeheizt. In diese aufgeheizte Pressform wird der Leiterrohling eingebracht, worauf die Pressform geschlossen wird. Danach werden die Pressform und der Leiterrohling gemeinsam unter geringer Druckbeaufschlagung des Leiterrohlings bis zu einer Endtemperatur weiter aufgeheizt. Bei dieser Endtemperatur fliesst das Polymer des Isoliermaterials bereits. Danach erfolgt während einer vorgegebenen Zeitspanne eine Beaufschlagung des erwärmten Leiterrohlings mit einem maximal vorgesehenen Pressdruck unter Beibehaltung der Endtemperatur. Während dieser Beaufschlagung werden die Lagen der Folie zu einem isolierenden, nicht mehr hygroskopischen Kompositmaterial zusammengeschmolzen und etwaige Lufteinschlüsse werden beseitigt, zudem ist das Kompositmaterial dann fest mit dem Leiter verbunden. Anschliessend erfolgt ein Abkühlen der Pressform auf eine Entnahmetemperatur unter gleichzeitiger Reduzierung des Pressdrucks, dabei verfestigt sich das Kompositmaterial. Sobald die Entnahmetemperatur erreicht ist, wird der fertig isolierte Leiter aus der Pressform entnommen und es erfolgt eine Abkühlung desselben auf die Raumtemperatur.

Der Leiter ist aus blankem, nicht oxidiertem Kupfer und weist einen Querschnitt von 15mm x 50mm auf. Er wird mit 16 Lagen der oben erwähnten Folie umwickelt, und zwar so, dass beim Leiterrohling eine Überlappung von 50% eingehalten wird. Die Pressform wird auf 150°C vorgeheizt. Diese Temperatur wird auf 250°C gesteigert während der Leiterrohling mit 0,2 MPa Druck beaufschlagt wird. Nach dem Erreichen der Endtemperatur von 250°C wird während 2 Minuten ein Druck von 5 MPa ausgeübt. Danach wird bei sinkendem Druck wieder auf 150°C abgekühlt. Bei dieser Temperatur wird der fertig isolierte Leiter aus der Pressform entnommen und dann auf Raumtemperatur abgekühlt. Die Schicht aus dem Kompositmaterial ist bei diesem Beispiel 2mm dick. Diese Isolationsschicht weist einen Verlustfaktor tanδ=1,3·10⁻³ auf. Während 2000 Stunden hielt die Isolation einer Wechselspannung von 18 kV bei 500 Hz einwandfrei stand. Im Rahmen von Dauerversuchen wird diese Wechselspannungsprüfung weitergeführt.

Die Fig.2 zeigt einen Teilschnitt durch einen Leiter 4 mit dem mit ihm verbundenen und ihn umgebenden Kompositmaterial 5, welches aus der Polysulfonmatrix mit den eingelagerten Micromicaplättchen und den verschiedenen Schichten Trägermaterial 3 besteht. Hier sind lediglich drei der Trägermaterialschichten angedeutet. Das Kompositmaterial 5 weist keine Lufteinschlüsse oder sonstige, die Isolationsfestigkeit insbesondere die Teilentladungsfestigkeit negativ beeinflussenden Einschlüsse auf.

Die Fig.3 zeigt einen weiteren Teilschnitt durch einen Leiter 4 mit dem mit ihm verbundenen und ihn umgebenden Kompositmaterial 5, welches aus der Polysulfonmatrix mit den eingelagerten Micromicaplättchen besteht. Die verschiedenen Folienschichten sind hier nicht mehr zu erkennen, da durch das Heisspressen ein homogenes Kompositmaterial entstanden ist, welches sich gut mit dem Leiter verbunden hat.

Weitere Folien mit 30 bzw 35 Gewichtsprozent Micromicaplättchen, sowohl auf der Basis von Muskovit als auch auf der Basis von Phlogopit wurden entsprechend dem voranstehenden Verfahren für die Isolation von weiteren gleichartigen Leitern verwendet. Dabei wurden die Verfahrensparameter Pressdruck und Endtemperatur ebenfalls variiert, der Druck im Bereich von 1 MPa bis 5 MPa und die Endtemperatur im Bereich von 220°C bis 250°C. Die Isolationen der so entstandenen elektrisch isolierten Leiter hielten alle während 2000 Stunden einer Wechselspannung von 18 kV bei 500 Hz einwandfrei stand. Im Rahmen von Dauerversuchen wird diese Wechselspannungsprüfung weitergeführt.

Bei spannungsmässig hochbelasteten Leitern empfiehlt es sich, den gesamten Leiter oder zumindest den Teil des Leiters, der bei der Montage in einer Maschinennut im Bereich des Nutendes liegt, mit einer Feldsteuerung zu versehen. Dazu wird für die oberste Lage der Leiterisolation in diesem Bereich ein teilweise leitendes oder halbleitendes Material verwendet, wie es gemäss Ausführungsbeispiel 7 hergestellt wurde. Eine örtliche Überlastung der Isolation wird so sicher vermieden.

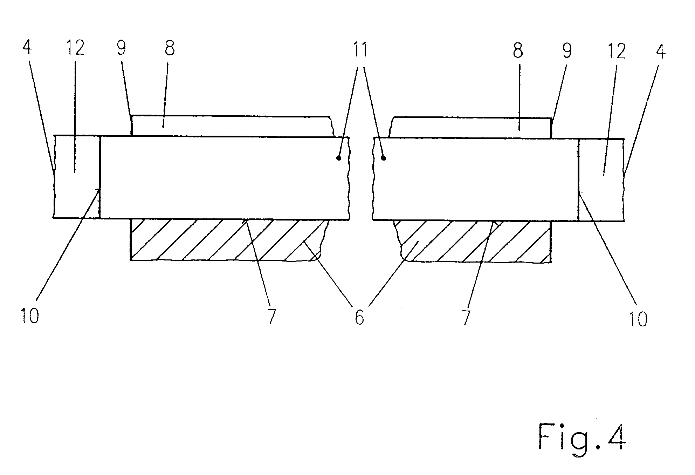

In der Fig.4 wird eine schematische Darstellung eines in eine Nut einer Maschine eingelegten, isolierten Leiters 4 gezeigt. Die Maschine weist ein Blechpaket 6 auf, welches geschnitten angedeutet ist. Der isolierte Leiter 4 liegt auf dem Boden 7 der Nut auf und wird durch Nutflanken 8 gestützt. Die Befestigung des Leiters 4 ist nicht dargestellt. Die Nut weist Nutenden 9 auf. Im Innern der Nut und etwas über die Nut hinaus ist der Leiter 4 mit einem homogen zusammengesetzten Kompositmaterial isoliert. Die oberste Schicht dieser Isolation ist bis hin zu jeweils einer Trennlinie 10, die ausserhalb des jeweiligen Nutendes 9 liegt, mit einem leitenden Belag 11 versehen. Für diesen leitenden Belag 11 wird in der Regel leitendes Material verwendet, welches entsprechend dem Ausführungsbeispiel 7 hergesstellt wurde. Ab der Trennlinie 10 wird die oberste Lage der Leiterisolation auf der dem Nutende 9 abgewandten Seite jeweils durch einen teilweise leitenden oder halbleitenden Belag 12 gebildet. Für diesen Belag 12 wird in der Regel ebenfalls Material verwendet, welches entsprechend dem Ausführungsbeispiel 7 hergestellt wurde. Dieses teilweise leitende oder halbleitende Material weist ebenfalls eine Polysulfonmatrix auf, die sich beim Heisspressen mit dem darunterliegenden gleichartigen Kompositmaterial gut verbindet.

Für Leiter die aus einzelnen Teilleitern aufgebaut sind, wobei jeder Teilleiter separat isoliert ist, ist das oben beschriebene Verfahren, unabhängig von der Art der Teilleiterisolation, ebenfalls vorteilhaft einsetzbar. Insbesondere wenn Polysulfon als Polymer eingesetzt ist, sind keine Unverträglichkeitsreaktionen zwischen diesem und den heute für Teilleiter üblichen Isoliermaterialien zu erwarten.

Eine besonders vorteilhafte Ausgestaltung der Leiterisolation ergibt sich jedoch, wenn auch die Teilleiterisolation aus dem gleichen Isoliermaterial aufgebaut ist wie die Aussenisolation des Leiters. Beim Heisspressen erhält man dann einen Leiter, dessen Teilleiter in ein homogenes Kompositmaterial eingebettet sind und der deshalb sowohl bezüglich der Isolationsfestigkeit als auch im Hinblick auf die mechanische Festigkeit optimal ist. Wird in diesem Fall als Leiter ein Roebelstab eingesetzt, so werden die sich wegen der Abkröpfung der Teilleiter ergebenden Hohlräume im Innern des Leiters durch das beim Heisspressen fliessende thermoplastische Isoliermaterial aufgefüllt, sodass sich auch hier keine Schwachstellen in der Leiterisolation ausbilden können.

### BEZEICHNUNGSLISTE

- 1: Thermoplast
- 2: Micromicaplättchen
- 3: Trägermaterial
- 4: Leiter
- 5: Kompositmaterial
- 6: Blechpaket
- 7: Boden
- 8: Nutflanke
- 9: Nutenden
- 10: Trennlinie
- 11: leitender Belag
- 12: Belag

## Patentansprüche

1. Elektrisches Isoliermaterial mit einer Matrix aus mindestens einem temperaturbeständigen Thermoplast in welche mindestens ein plättchenförmig ausgebildetes, isolierendes Mineral vorzugsweise in der Form von Micromicaplättchen eingelagert ist, dadurch gekennzeichnet,
- dass die Micromicaplättchen eine Teilchengrösse kleiner als 20µm aufweisen,
- dass das Isoliermaterial aus einer Dispersion hergestellt wird, in welcher Partikel des Thermoplasts und die Micromicaplättchen dispergiert sind, und welche für die Beschichtung eines Trägermaterials verwendet wird, und
- dass das beschichtete Trägermaterial bei einer Temperatur, bei welcher das Thermoplast fliesst, getrocknet wird.

2. Elektrisches Isoliermaterial nach Anspruch 1, dadurch gekennzeichnet,
- dass als Thermoplast Polyimide oder Polykarbonate oder Polyethylenterephthalate oder Polyethylennaphtalate oder Polyphenylsulfide oder Polyphenyloxide oder Polyetherimide oder Polyetheretherketone oder Polypropylen oder Polyphenylsulfon oder Polyarylsulfon oder Polyethersulfon insbesondere Polysulfon vorgesehen ist.

3. Elektrisches Isoliermaterial nach Anspruch 1, dadurch gekennzeichnet,
- dass als isolierendes Mineral entweder Muskovit oder Phlogopit oder ein Gemisch der beiden Mineralien eingesetzt wird.

4. Elektrisches Isoliermaterial nach Anspruch 3, dadurch gekennzeichnet,
- dass 20 bis 40 Gewichtsprozent Micromicaplättchen in das Thermoplast eingelagert sind.

5. Elektrisches Isoliermaterial in Folienform nach einem der Ansprüche 1 bis 4, dadurch gekennzeichnet,
- dass als ein erster Schritt eine Rohfolie durch ein Extrudierverfahren hergestellt wird, welche aus dem Thermoplast und dem eingelagerten Mineral besteht.

6. Elektrisches Isoliermaterial nach Anspruch 5, dadurch gekennzeichnet,
- dass in einem zweiten Schritt der Rohfolie ein als mechanische Verstärkung dienendes Trägermaterial in einem Kalander aufgewalzt wird.

7. Elektrisches Isoliermaterial nach einem der voranstehenden Ansprüche, dadurch gekennzeichnet,
- dass in das Isoliermaterial zusätzlich leitende oder halbleitende Partikel eingelagert sind.

8. Elektrisches Isoliermaterial nach Anspruch 7, dadurch gekennzeichnet,
- dass als leitende Partikel Pigmente aus Mica-Metalloxid-Verbindungen oder aus Metalloxidverbindungen verwendet werden.

9. Elektrisches Isoliermaterial nach Anspruch 1, dadurch gekennzeichnet,
- dass als Trägermaterial ein längsverstärktes Polyesterflies oder ein Glasfasergewebe verwendet wird.

10. Leiter mit einer elektrisch isolierenden Ummantelung, für die das elektrische Isoliermaterial gemäss einem der Ansprüche 1 bis 9 eingesetzt wird, dadurch gekennzeichnet,
- dass das elektrische Isoliermaterial lagenförmig auf den Leiter aufgebracht und heiss mit dem Leiter verpresst ist.

11. Leiter nach Anspruch 10, dadurch gekennzeichnet,
- dass jeweils der Teil des Leiters, der bei einer Montage in einer Maschinennut im Bereich des Nutendes liegt, beim Anbringen einer letzten Lage des Isoliermaterials mit einem Isoliermaterial in welches zusätzlich leitende oder halbleitende Partikel eingelagert sind, versehen wird.

12. Leiter nach einem der Ansprüche 10 oder 11, dadurch gekennzeichnet,
- dass der Leiter aus jeweils separat isolierten Teilleitern aufgebaut ist.

13. Leiter nach Anspruch 12, dadurch gekennzeichnet,
- dass sowohl für die Isolation der jeweils separat isolierten Teilleiter als auch für die des Leiters das gleiche Isoliermaterial eingesetzt wird.

14. Leiter nach Anspruch 13, dadurch gekennzeichnet,
- dass der Leiter als Roebelstab ausgebildet ist.

15. Verfahren zur Herstellung eines elektrisch isolierten, Leiters gemäss einem der Ansprüche 10 bis 14, welches folgende Verfahrensschritte aufweist:
a) Vortrocknen des Isoliermaterials,
b) Aufbringen mindestens einer Lage des vorgetrockneten Isoliermaterials auf den Leiter, der so zum Leiterrohling wird,
c)Aufheizen einer Pressform,
d) Einbringen des Leiterrohlings in die aufgeheizte Pressform und Schliessen derselben,
e) Aufheizen der Pressform und des Leiterrohlings unter geringer Druckbeaufschlagung des Leiterrohlings bis zu einer Endtemperatur, bei welcher das Thermoplast fliesst,
f) Beaufschlagung des erwärmten Leiterrohlings mit einem maximal vorgesehenen Pressdruck unter Beibehaltung der Endtemperatur,
g) Abkühlen der Pressform auf eine Entnahmetemperatur unter gleichzeitiger Reduzierung des Pressdrucks,
h) Entnahme des fertig isolierten Leiters und Abkühlung desselben auf die Raumtemperatur.
